# EUROPÄISCHE PATENTANMELDUNG

(11) **EP 1 684 105 A1**
(43) Veröffentlichungstag der Anmeldung: **26.07.2006**
(21) Anmeldenummer: 05023073.9
(22) Anmeldetag: 21.10.2005
(51) Int. Cl.: G02B 7/02, G02B 13/14, G02B 15/10

(54) **Optisches System**

(30) Priorität: 19.01.2005 DE 102005002710
(71) Anmelder: LINOS Photonics GmbH & Co. KG, 37081 Göttingen (DE)
(72) Erfinder: Blechinger, Fritz, 37081 Göttingen (DE)
(74) Vertreter: Säger, Manfred

(57) **Zusammenfassung**

Ein im Unendlichen liegendes Objekt über ein Zwischenbild in eine Bildebene abbildendes optisches System mit einer Frontgruppe und mit einer Relais-Optik bekannt, die jeweils mehrere Linsen aufweisen und zwischen denen das Zwischenbild liegt. Das System kennzeichnet sich dadurch aus, dass das optische System als das im Unendlichen liegende Objekt mit mindestens zwei schalt- und/oder zoombaren Sehfeldern in die Bildebene abbildbar ausgebildet ist und, dass die Frontgruppe in Richtung der Bildebene aufeinander folgt, mindestens drei Linsen aufweist, von denen zumindest eine erste aus Germanium, zumindest eine zweite aus ZnSe und zumindest eine dritte entweder aus MgF₂, CaF₂, oder MgO besteht.

## Beschreibung

Die Erfindung betrifft ein gattungsgemässes optisches System nach dem Oberbegriff des Hauptanspruchs, nämlich ein im Unendlichen liegendes Objekt über ein Zwischenbild in eine Bildebene abbildendes optisches System mit einer Frontgruppe und mit einer Relais-Optik, die jeweils mehrere Linsen aufweisen und zwischen denen das Zwischenbild liegt.

In optischen Systemen, die Wärmestrahlung bildgebend erfassen, ist häufig eine Stabilität des Sehfeldes einer Bildlage über einen bestimmten Temperaturbereich erforderlich. Üblicherweise wird dies durch manuelles oder automatisiertes, motorisches Nachfokussieren erzielt. Durch eine geeignete optomechanische Auslegung kann die Variation des Fokus über der Temperatur so weit minimiert werden, dass diese innerhalb der Tiefenschärfe bleibt und so für den praktischen Anwendungsfall unmerklich bleibt. Ein Nachfokussieren ist dann nicht mehr erforderlich, wobei jedoch der Aufwand solcher Lösungen aufgrund der bewegten Komponenten deutlich höher als bei unkompensierten Systemen ist. Solche optomechanische Auslegung optischer Systeme durch manuelles oder automatisiertes (motorisches) Nachfokussieren wird im folgenden als aktive Athermalisierung bezeichnet.

Durch gezielte Abstimmung von optischen Komponenten und mechanischen Fassungsteilen lässt sich eine Athermalisierung des Fokus aber auch ohne mechanisch bewegte Komponenten realisieren, was im folgenden als passive Athermalisierung bezeichnet wird.

So ist ein gattungsgemässes optisches System bekannt (DE 19807093 A1), mit dem für eine einzige Brennweite beziehungsweise ein einzelnes Sehfeld eine weitestgehende Temperaturinvarianz der Bildlage erzielbar ist.

Insbesondere bei der passiven Athermalisierung für den infraroten Spektralbereich vergrössern sich die Probleme bei dem gattungsgemässen optischen System infolge der geringeren Auswahl praktisch einsetzbarer Komponenten; aufgrund dessen ist eine vollständige passive Athermalisierung im infraroten Spektralbereich oftmals nicht vollständig durchzuführen, wobei dann ein gewisser Restfehler der Bildlage toleriert wird.

Der Erfindung liegt die Aufgabe zugrunde, ein optisches System gemäss dem Oberbegriff des Hauptanspruchs mit zumindest zwei Sehfeldern vorzuschlagen, bei dem eine vollständige passive Athermalisierung möglich ist.

Diese Aufgabe wird bei einem gattungsgemässen System gemäss dem Oberbegriff des Hauptanspruchs erfindungsgemäss durch dessen kennzeichnende Merkmale gelöst.

Durch die Lehre der Erfindung wird also ein im Unendlichen liegendes Objekt in zumindest zwei zoom-und/oder schaltbaren Sehfeldern auf eine Bildebene abbildbar ausgebildet, wenn die Frontgruppe zumindest drei Linsen aufweist, von denen zumindest eine erste aus Germanium (Ge), zumindest eine zweite aus Zinkselenid (ZnSe) und zumindest eine dritte entweder aus Magnesiumfluorid (MgF₂), Calziumfluorid (CaF₂) oder Magnesiumoxid (MgO) besteht. Mit einem erfindungsgemäss ausgebildeten optischen System wird die Lage der -konstanten- optimalen Bildschärfe, des Fokus, über einen grossen Temperaturbereich (dem Betrage nach 50°C) für die zumindest zwei Sehfelder erzielt, wobei diese passive Athermalisierung ohne jegliche Bewegung oder Verschiebung von mechanischen oder optischen Komponenten erzielt wird. Hierbei liegt die maximale Abweichung der Bildlagen über den gesamten Temperaturbereich und für die zumindest zwei Sehfelder gemeinsam innerhalb der beugungsbegrenzten Tiefenschärfe.

Vorzugsweise ist das optische System für die zumindest zwei Sehfelder achromatisch in einem Wellenlängenbereich von 3 bis 5 µm, sodass das optische System auch speziell für infrarote Spektralbereiche einsetzbar ist.

In zweckmässiger Ausgestaltung der Erfindung weist die Frontgruppe zumindest vier Linsen mit genau einer Meniskuslinse auf, die entweder aus Germanium oder Silizium (Si) besteht.

Weitere zweckmässige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:
Figur 1 ein optisches System mit genau zwei schaltbaren Sehfeldern, in einem ersten Schaltzustand und
Figur 2 das optische System gemäss Figur 1 mit dem zweiten Sehfeld in dem anderen Schaltzustand.

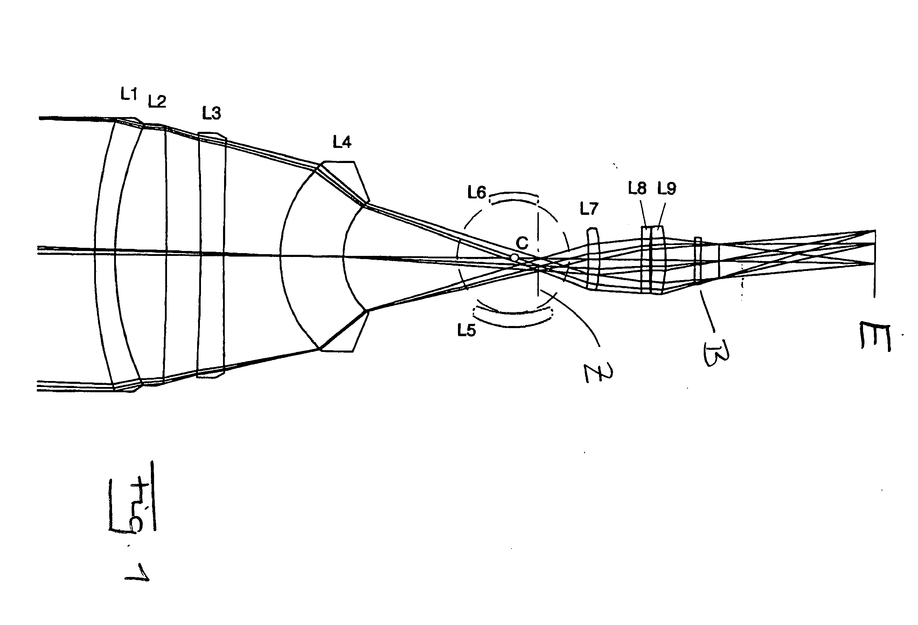

Das in Figur 1 dargestellte optische System, welches eine Frontgruppe L1-L5 mit zumindest drei Linsen L1,L2,L3 aufweist, der eine Meniskuslinse L4 nachgeordnet ist, die entweder aus Ge oder Si besteht. Von den zumindest drei Linsen L1,L2,L3 der Frontgruppe besteht zumindest eine aus Ge, zumindest eine zweite aus ZnSe und zumindest eine dritte entweder aus MgF₂, CaF₂ oder MgO.

Zwischen der Bildebene E und der Frontgruppe L1-L5 ist eine Relais-Optik L6-L9 vorgesehen, zwischen der und der Frontgruppe L1-L5 ein Zwischenbild Z erzeugt wird. Ferner ist eine physikalische Blende B zwischen der letzten Linse L9 der Relais-Optik und der Bildebene E zur Erzielung einer hundertprozentigen Kaltblenden-Effektivität angeordnet.

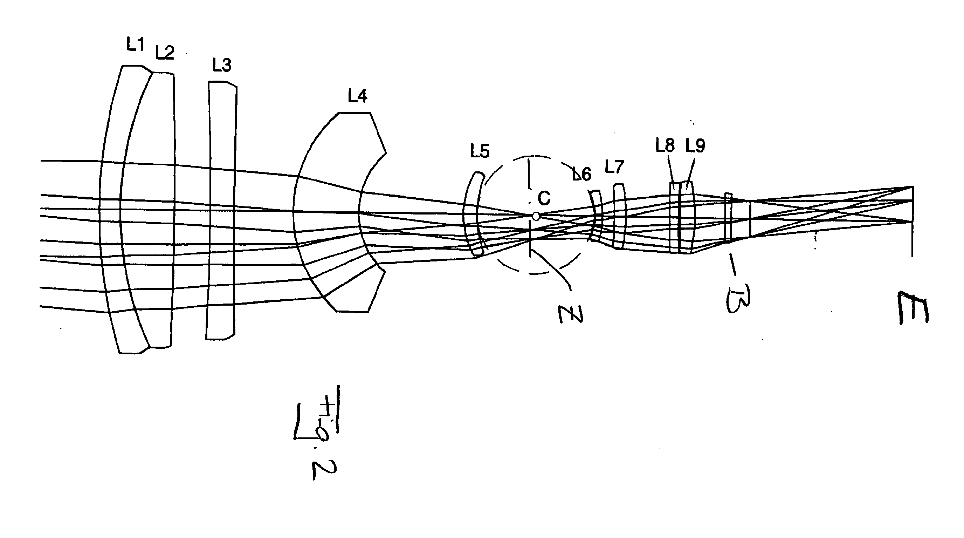

Ferner sind im Bereich des Zwischenbildes Z zwei zueinander starr, zusammen aber gemeinsam drehbare Linsen L5,L6 vorgesehen, die in ihrer einen Schaltstellung (Figur 1) ausserhalb des Strahlengangs liegen und zwecks Umschaltung auf das zweite Sehfeld um ihren sich nahe an dem Zwischenbild Z für das kleine Sehfeld befindlichen Drehpunkt C in den Strahlengang in ihren zweiten Schaltzustand (Figur 2) einschwenkbar ist.

Die beiden Linsen L5-L6 sind hierbei aus im Strahlengang zu der Bildebene E letzten Linse L5 der Frontgruppe L1-L5 und der ersten Linse L6 der Relais-Optik L6-L9 gebildet.

Die zumindest zwei Sehfelder weisen hierbei ein Verhältnis von 1,5 <WFOV/NFOV< 5auf. Die bildseitige nummerische Apertur beträgt 0,05 < NA < 0,15.

## Patentansprüche

1. Ein im Unendlichen liegendes Objekt über ein Zwischenbild (Z) in eine Bildebene (E) abbildendes optisches System mit einer Frontgruppe (L1-L5) und mit einer Relais-Optik (L6-L9), die jeweils mehrere Linsen aufweisen und zwischen denen das Zwischenbild (Z) liegt, **dadurch gekennzeichnet, dass** das optische System als das im Unendlichen liegende Objekt mit zumindest zwei schalt- und/oder zoombaren Sehfeldern in die Bildebene abbildbar ausgebildet ist und dass die Frontgruppe in Richtung der Bildebene (E) aufeinanderfolgend zumindest drei Linsen (L1,L2,L3) aufweist, von denen zumindest eine erste aus Ge, zumindest eine zweite aus ZnSe und zumindest eine dritte entweder aus MgF₂, CaF₂ oder MgO besteht.

2. System nach Anspruch 1, **dadurch gekennzeichnet, dass** die Frontgruppe (L1-L5) hinter den ersten drei Linsen eine Meniskuslinse (L4) aufweist.

3. System nach Anspruch 2, **dadurch gekennzeichnet, dass** die Meniskuslinse (L4) entweder aus Ge oder Si besteht.

4. System nach einem der Ansprüche 1 bis 3, **dadurch gekennzeichnet, dass** zwei starr, zusammen aber drehbare und in den Strahlengang einschwenkbare Linsen (L5,L6) zwecks Umschaltung in das zweite Sehfeld vorgesehen sind, wobei deren Drehpunkt (C) nahe dem Zwischenbild (Z) für das kleine Sehfeld (Figur 2) angeordnet ist.

5. System nach Anspruch 4, **dadurch gekennzeichnet, dass** die eine in den Strahlengang einschwenkbare Linse (L5) der Frontgruppe (L1-L5) zugeordnet ist.

6. System nach Anspruch 5, **dadurch gekennzeichnet, dass** die beiden zueinander starr, zusammen aber drehbar angeordneten Linsen (L5,L6) von der im Strahlengang zu der Bildebene (E) letzten Linse (L5) der Frontgruppe (L1-L5) und der ersten Linse (L6) der Relais-Optik (L6-L9) gebildet werden.

7. System nach Anspruch 6, **dadurch gekennzeichnet, dass** die beiden Linsen (L5,L6) um den gemeinsamen Drehpunkt (C) um etwa 90° schwenkbar ausgebildet sind.

8. System nach einem der Ansprüche 1 bis 7, **dadurch gekennzeichnet, dass** das optische System für die zumindest zwei Sehfelder achromatisch in einem Wellenlängenbereich von 4 bis 8 µm, vorzugsweise 3 bis 5µm ist.

9. System nach einem der Ansprüche 1 bis 8, **dadurch gekennzeichnet, dass** eine physikalische Blende (B) zwischen der letzten Linse (L9) der Relais-Optik (L6-L9) und der Bildebene (E) vorgesehen ist.

10. System nach einem der Ansprüche 1 bis 9, **dadurch gekennzeichnet, dass** die zumindest zwei Sehfelder ein Verhältnis von 1,5 < WFOV/NFOV < 5 aufweisen.

11. System nach einem der Ansprüche 1 bis 10, **dadurch gekennzeichnet, dass** die bildseitige nummerische Apertur 0,05 < NA < 0,15 beträgt.
